# EUROPEAN PATENT APPLICATION

(11) **EP 4 697 777 A1**
(43) Date of publication of application: **18.02.2026**
(21) Application number: 25195318.8
(22) Date of filing: 12.08.2025
(51) Int. Cl.: H04W 12/50, H04W 4/90, H04W 76/50, H04W 84/12, H04W 88/06

(54) **WIFI PROTECTED ACCESS BYPASS FOR EMERGENCY VOICE SERVICES**

(30) Priority: 13.08.2024 US 202418802564
(71) Applicant: T MOBILE INNOVATIONS LLC, Overland Park KS 66251-2100 (US)
(72) Inventor: PENUMATSHA, Manikanta Kumar Teja, Washington, 98052-2146 (US); CRUZ, Jenniffer Lucas, Renton, 98059 (US); DIAZ MANJARREZ, Barbara Maria Elena, Lynnwood, 98087 (US); PANDEY, Sudhanshu, Sammamish, 98074 (US)
(74) Representative: Suddaby, Mark Edward

(57) **Abstract**

Systems, methods, devices and non-transitory computer-readable mediums are provided for bypassing WiFi protected access in emergency situations. A wireless device generates and transmits an emergency key identifier (EKI) to an apparatus providing an available WiFi network upon finding a lack of credentials stored in the memory for utilizing the available WiFi network. The apparatus establishes an emergency session and the wireless device joins the emergency session established by the apparatus providing the available WiFi network.

## Description

### TECHNICAL BACKGROUND

When connected to a radio access network (RAN), wireless devices such as smart phones are able to make emergency calls, i.e., 911 calls, using a cellular network. However, in some instances, when the wireless devices are not connected to the RAN and are not able to access the cellular network, they may make emergency calls utilizing Voice Over Wifi (VoWiFi), also known as WiFi calling, which is a feature available in most of the smart phones such as iPhone^{®}, Samsung Galaxy^{®}, Google Pixel^{®} etc. In these instances, the wireless devices may connect to a wireless gateway device, router, or WiFi modem to make an emergency call such as an enhanced 911 (E911) call using VoWiFi.

With E911 cellular calls, the mobile devices communicate with a base station or access node. Access nodes may deploy different carriers within the cellular network utilizing different types of radio access technologies (RATs). RATs can include, for example, 3G RATs (e.g., GSM, CDMA etc.), 4G RATs (e.g., WiMax, LTE, etc.), and 5G RATs (new radio (NR)) and 6G RATs. Further, different types of access nodes may be implemented for deployment for the various RATs. For example, an evolved NodeB (eNodeB or eNB) may be utilized for 4G RATs and a next generation NodeB (gNodeB or gNB) may be utilized for 5G RAT However, with VoWiFi calling including E911 calls, the mobile device communicates over the Internet and does not communicate with the access node or base station directly.

In some instances, E911 calls outside of cellular range fail despite the presence of a WiFi signal, as the wireless device lacks credentials to join the WiFi network. This may occur, for example, when the wireless device user is not at home and is in a public place, private business, or someone else's house. This type of situation may impact mobile users traveling through remote locations. Further, in dense areas with tall buildings, underground garages, subways, etc., mobile signals may be occasionally blocked and thus VoWiFi calling might be the only mechanism available for emergency calls.

Accordingly, when circumstances for a wireless user include lack of wireless cell phone network and availability of a WiFi network, but no WiFi credentials, wireless users are unable to make emergency calls. Thus, in emergencies, this situation prevents the initiation of E911 calls, as devices cannot connect to WiFi networks without the necessary credentials. Accordingly a solution is needed for enabling VoWiFi E911 calling in the absence of user credentials to utilize a WiFi network.

### OVERVIEW

Exemplary embodiments described herein include systems, methods, information elements and components of information elements, wireless devices, and other apparatus for ensuring the availability of emergency calling to wireless device users lacking WiFi credentials. An exemplary wireless device includes a memory storing data and instructions and a processor accessing the data and instructions and executing the instructions to perform multiple operations. The operations include scanning for an available WiFi network and transmitting an emergency key identifier (EKI) to an apparatus providing the available WiFi network upon finding a lack of credentials stored in the memory for utilizing the available WiFi network. The operations further include joining an emergency session established by the apparatus providing the WiFi network availability.

In additional aspects, an emergency key identifier (EKI) is provided. The EKI is included as an information element (IE) embedded in a WiFi frame transmitted from a wireless device to an apparatus providing WiFi network availability to request establishment of an emergency voice over WiFi (VoWiFi) session.

Further exemplary embodiments include an apparatus, which may be or include a wireless access point, a wireless gateway, a router, or a WiFi modem. The apparatus includes a memory storing data and instructions and wireless communication component. The apparatus further includes a processor accessing the data and instructions and executing the instructions to perform multiple operations. The operations include receiving an emergency key identifier (EKI) from a wireless device lacking credentials to access voice over WiFi (VoWiFi) and establishing an emergency session permitting the wireless device to access VoWiFi.

Further exemplary embodiments include methods and non-transitory computer readable mediums as will be further described herein. The methods are performed by the above-described wireless devices, apparatus, and/or systems further described herein.

### BRIEF DESCRIPTION OF THE DRAWINGS

FIG. 1 depicts an exemplary operating environment for a WiFi protected access (WPA) bypass system in accordance with the disclosed embodiments.
FIG. 2 illustrates a WPA bypass system in accordance with disclosed embodiments.
FIG. 3 illustrates an exemplary configuration for a wireless device for use in a WPA bypass system in accordance with disclosed embodiments.
FIG. 4 illustrates an exemplary configuration for a wireless gateway device for use in a WPA bypass system in accordance with disclosed embodiments.
FIG. 5 illustrates an exemplary operation scenario between a wireless device and a wireless gateway device used in a WPA bypass system in accordance with disclosed embodiments.
FIG.6 illustrates a method performed by a wireless device to bypass WPA in accordance with disclosed embodiments.
FIG. 7 depicts a further exemplary method performed by a wireless device to bypass WPA in accordance with disclosed embodiments.
FIG. 8 depicts a further exemplary method performed by a wireless gateway device for bypassing WPA in accordance with disclosed embodiments.
FIG. 9 depicts an emergency key identifier (EKI) for use in bypassing WPA in accordance with disclosed embodiments.
FIG. 10 depicts a WiFi frame for transmission of an EKI for use in bypassing WPA in accordance with disclosed embodiments.

### DETAILED DESCRIPTION

Exemplary embodiments described herein include systems, methods, wireless devices, information elements (IEs), and apparatus for providing WiFi protected access (WPA) bypass to allow for emergency calling. Embodiments provided herein incorporate an emergency field in a WiFi frame in order to bypass WPA. The emergency field may be or include an emergency key identifier (EKI). The EKI functions as a temporary session key associated with a specific emergency call. When a wireless device detects that the only available WiFi network is secured or locked and no RAN signal is available, the wireless device generates and transmits an EKI to an apparatus providing the WiFi network. The apparatus, upon recognizing the EKI, temporarily establishes an emergency session and allows the wireless device to connect for the duration of the emergency call.

Embodiments provided herein enable smart wireless devices such enhanced mobile broadband (eMBB) devices and internet of things (IoT) devices to utilize an EKI system to connect to WiFi networks during emergency situations without requiring standard credentials. The EKI system encompasses a method for generating, transmitting, and validating emergency keys, allowing devices to establish secure and reliable communication with an apparatus providing WiFi connectivity such as a WiFi modem, router, wireless gateway, wireless access point (WAP) or any combination thereof under predefined emergency conditions. The system incorporates unique identifiers, timestamps, cryptographic signatures, and device-specific data to ensure the authenticity and integrity of the connection request. Upon detecting an emergency scenario (e.g., an emergency call is initiated at the wireless device), the wireless device generates an EKI and embeds the EKI in a WiFi association request. The apparatus providing the WiFi network is pre-configured to recognize and validate EKIs and processes the request and grants network access, ensuring continuous connectivity for critical communication and data transmission. Innovations described herein enhance the reliability and security of emergency responses, particularly in scenarios involving IoT devices, smart home systems, connected vehicles, and other critical infrastructures.

In operation, the wireless device actively scans to look for access points when the RAN is unavailable. For example, the wireless device user is not at home and is in a location with no cellular coverage. Through actively scanning, the wireless device locates a wireless network, but has no credentials to access the wireless network. In this instance, in case of emergency, the wireless device generates and transmits an EKI to the apparatus providing the wireless network. The EKI notifies the apparatus that the wireless device has an emergency. In response, the apparatus opens a temporary channel and establishes a session for the wireless device, thereby bypassing WiFi protected access (WPA) or other security method implemented by the apparatus, such as wired equivalent privacy (WEP), WPA2, WPA3 etc.

In addition to the systems and methods described herein, the operations for bypassing WPA or another security method may be implemented as computer-readable instructions or methods, and processing nodes on the network for executing the instructions or methods. The processing node may include a processor included in the access node or a processor included in any controller node in the wireless network that is coupled to the access node.

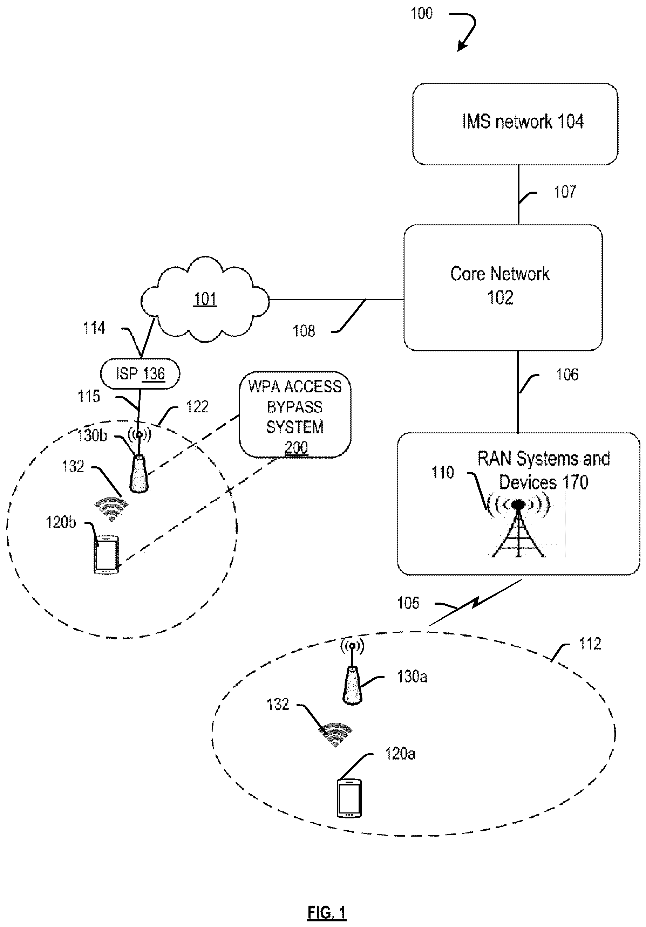

FIG. 1 depicts an exemplary environment 100 for bypassing WPA using a WPA access bypass system 200 in accordance with the disclosed embodiments. The environment 100 may include a communication network 101, a core network 102, an internet protocol multimedia subsystem (IMS) network 104 and a radio access network (RAN) 170, including at least one access node 110. The core network 102, the IMS network 104, and the RAN 170 may be part of a wireless carrier network, also known as a cellular network, such as a 5G network. The core network 102 is connected to the communication network 101 over communication link 108 and to the IMS network 104 over the communication link 106.

The environment 100 also includes wireless devices 120a and 120b which may be end-user wireless devices such as smart phones and may operate within one or more coverage areas 112, 122 provided by one or more apparatus 130a, 130b, respectively. Further, one or more apparatus 130a, 130b may be provided for allowing the devices 120a and 120b to connect to the Internet. The apparatus 130a and 130b may be or include WiFi access points, wireless gateway devices, WiFi modems, routers, or any combination of these devices. The apparatus 130a and 130b may allow the wireless devices 120a and 120b to connect via wireless links 132a and 132b in the coverage areas 112 and 122. The wireless device 120a in the coverage area 112 may further communicate with the RAN 170 over communication link 105 when in range of the access node 110, which may for example be a 5G NR and/or 4G LTE communication link. However, the wireless device 120b in the coverage area 122 may be out of range of the access node 110. Thus, in some scenarios, the wireless device 120b in the coverage area 122 may utilize a WiFi communication link 132b to connect to the apparatus 130b when the wireless device 120b has the credentials to access WiFi through the apparatus 130b. The apparatus 130b may utilize communication link 115 to connect with an Internet service provider (ISP) 136 that connects to the communication network 101, which may be the Internet, via a communication link 114.

The environment 100 may further include an example implementation of the WPA bypass system 200, which is illustrated as operating between the apparatus 130b and the wireless device 120b. In embodiments further illustrated herein, the WPA bypass system 200 is distributed, such that it includes components both in the wireless device 120b and the apparatus 130b. Alternatively, the WPA access bypass system 200 may be an entirely discrete component, such as a processing node. Further, the wireless device 120b and the apparatus 130b may be capable of downloading system components from the WPA access bypass system 200.

The WPA access bypass system 200 provides the wireless device 120b and the apparatus 130b with necessary components to bypass WPA in scenarios when the wireless device 120b detects an emergency scenario and lacks credentials to access WiFi through the apparatus 130b. As further explained above, the wireless device 120b is not within range of the access node 110 and therefore is unable to utilize the cellular network. Accordingly, because the wireless device 120b also lacks credentials to access the apparatus 130b, the wireless device 120b must bypass WPA in order to make an emergency call. In order to accomplish this goal, the apparatus 130b is equipped with tools of the WPA access bypass system 200 to establish an emergency session for the wireless device 120b.

Communication network 101 can be a wired and/or wireless communication network, and can comprise processing nodes, routers, gateways, and physical and/or wireless data links for carrying data among various network elements, including combinations thereof, and can include a local area network a wide area network, and an internetwork (including the Internet). Communication network 101 can be capable of carrying data, for example, to support voice, push-to-talk, broadcast video, and data communications by wireless devices 120a and 120b. Wireless network protocols can comprise MBMS, code division multiple access (CDMA) 1xRTT, Global System for Mobile communications (GSM), Universal Mobile Telecommunications System (UMTS), High-Speed Packet Access (HSPA), Evolution Data Optimized (EV-DO), EV-DO rev. A, Third Generation Partnership Project Long Term Evolution (3GPP LTE), Worldwide Interoperability for Microwave Access (WiMAX), Fourth Generation broadband cellular (4G, LTE Advanced, etc.), and Fifth Generation mobile networks or wireless systems (5G, 5G New Radio ("5G NR"), or 5G LTE). Wired network protocols that may be utilized by communication network 101 comprise Ethernet, Fast Ethernet, Gigabit Ethernet, Local Talk (such as Carrier Sense Multiple Access with Collision Avoidance), Token Ring, Fiber Distributed Data Interface (FDDI), and Asynchronous Transfer Mode (ATM). Communication network 101 can also comprise additional base stations, controller nodes, telephony switches, internet routers, network gateways, computer systems, communication links, or some other type of communication equipment, and combinations thereof.

The core network 102 includes core network functions and elements. The core network 102 may have an evolved packet core (EPC) or may be structured using a service-based architecture (SBA). The network functions and elements may be separated into user plane functions and control plane functions. In an SBA architecture, service-based interfaces may be utilized between control-plane functions, while user-plane functions connect over point-to-point links. The user plane function (UPF) accesses a data network, such as network 101, and performs operations such as packet routing and forwarding, packet inspection, policy enforcement for the user plane, quality of service (QoS) handling, etc. The control plane functions may include, for example, a network slice selection function (NSSF), a network exposure function (NEF), a network repository function (NRF), a policy control function (PCF), a unified data management (UDM) function, an application function (AF), an access and mobility function (AMF), an authentication server function (AUSF), and a session management function (SMF). Additional or fewer control plane functions may also be included. The AMF receives connection and session related information from the wireless devices 120a and 120b and is responsible for handling connection and mobility management tasks. The SMF is primarily responsible for creating, updating, and removing sessions and managing session context. The UDM function provides services to other core functions, such as the AMF, SMF, and NEF. The UDM may function as a stateful message store, holding information in local memory. The NSSF can be used by the AMF to assist with the selection of network slice instances that will serve a particular device. Further, the NEF provides a mechanism for securely exposing services and features of the core network.

The IMS network 104 is a standards-based architectural framework for delivering multimedia communications services such as voice, video and text messaging for mobile devices over IP networks. The IMS network 104 can be decomposed into distinct application, control, and transport layers with standardized interfaces and may enable secure multimedia communications between diverse devices across diverse networks.

Communication links 106, 108, 114, and 115 can use various communication media, such as air, space, metal, optical fiber, or some other signal propagation path, including combinations thereof. Communication links 106, 108, 114, and 115 can be wired or wireless and use various communication protocols such as Internet, Internet protocol (IP), local-area network (LAN), S1, optical networking, hybrid fiber coax (HFC), telephony, T1, or some other communication format - including combinations, improvements, or variations thereof. Wireless communication links can be a radio frequency, microwave, infrared, or other similar signal, and can use a suitable communication protocol, for example, Global System for Mobile telecommunications (GSM), Code Division Multiple Access (CDMA), Worldwide Interoperability for Microwave Access (WiMAX), Long Term Evolution (LTE), 5G NR, or combinations thereof. Other wireless protocols can also be used. Communication links 106, 108, 114, and 115 can be direct links or might include various equipment, intermediate components, systems, and networks, such as a cell site router, etc. Communication links 106 and 108 may comprise many different signals sharing the same link.

The RAN 170 may include various access network systems and devices such as access node 110. The RAN 170 is disposed between the core network 102 and the end-user wireless device 120a. Components of the RAN 170 may communicate directly with the core network 102 and others may communicate directly with the end user wireless devices 120a and 120b through the apparatus 130a and 130b. The RAN 170 may provide services from the core network 102 to the end-user wireless devices 120a and 120b.

The RAN 170 includes at least an access node (or base station) 110 such as an eNodeB or gNodeB 110 communicating with the plurality of end-user wireless devices 120a, 120b and apparatus 130a and 130b. It is understood that the disclosed technology may also be applied to communication between an end-user wireless device and other network resources, such as relay nodes, controller nodes, antennas, etc. Further, multiple access nodes may be utilized. For example, some wireless devices may communicate with an LTE eNodeB and others may communicate with an NR gNodeB. The RAN 170 may include other devices and additional access nodes.

Access node 110 can be, for example, standard access nodes such as a macro-cell access node, a base transceiver station, a radio base station, an eNodeB device, an enhanced eNodeB device, a gNodeB in 5G New Radio ("5G NR"), or the like. The gNBs may include, for example, centralized units (CUs) and distributed units (DUs). Access node 110 can be configured to deploy one or more different carriers, utilizing one or more RATs. For example, a gNodeB may support NR and an eNodeB may provide LTE coverage. Any other combination of access nodes and carriers deployed therefrom may be evident to those having ordinary skill in the art in light of this disclosure.

The access node 110 can comprise a processor and associated circuitry to execute or direct the execution of computer-readable instructions to perform operations such as those further described herein. Access node 110 can retrieve and execute software from storage, which can include a disk drive, a flash drive, memory circuitry, or some other memory device, and which can be local or remotely accessible. The software comprises computer programs, firmware, or some other form of machine-readable instructions, and may include an operating system, utilities, drivers, network interfaces, applications, or some other type of software, including combinations thereof.

The wireless devices 120a and 120b may include any wireless device included in a wireless network. Wireless devices 120a and 120b may be any device, system, combination of devices, or other such communication platform capable of communicating wirelessly with RAN 170 using one or more frequency bands and wireless carriers deployed therefrom and further capable of communicating with the network 101. Each of wireless devices 120a, 120b, may be, for example, a mobile phone, a wireless phone, a wireless modem, a personal digital assistant (PDA), a voice over internet protocol (VoIP) phone, a voice over packet (VOP) phone, or a soft phone, an internet of things (IoT) device, as well as other types of devices or systems that can send and receive audio or data. The wireless devices 120a, 120b may be or include high power wireless devices or standard power wireless devices. Other types of communication platforms are possible.

Environment 100 may further include many components not specifically shown in FIG. 1 including processing nodes, controller nodes, routers, gateways, and physical and/or wireless data links for communicating signals among various network elements. Environment 100 may include one or more of a local area network, a wide area network, and an internetwork (including the Internet). Environment 100 may be capable of communicating signals and carrying data, for example, to support voice, push-to-talk, broadcast video, and data communications by end-user wireless devices 120a and 120b. Environment 100 may include additional base stations, controller nodes, telephony switches, internet routers, network gateways, computer systems, communication links, or other type of communication equipment, and combinations thereof.

Other network elements may be present in the environment 100 to facilitate communication but are omitted for clarity, such as base stations, base station controllers, mobile switching centers, dispatch application processors, and location registers such as a home location register or visitor location register. Furthermore, other network elements that are omitted for clarity may be present to facilitate communication, such as additional processing nodes, routers, gateways, and physical and/or wireless data links for carrying data among the various network elements, e.g. between the RAN 170 and the core network 102.

The methods, systems, devices, networks, access nodes, and equipment described herein may be implemented with, contain, or be executed by one or more computer systems and/or processing nodes. The methods described above may also be stored on a non-transitory computer readable medium. Many of the elements of communication environment 100 may be, comprise, or include computers systems and/or processing nodes, including access nodes, controller nodes, and gateway nodes described herein.

The operations for WPA access bypass may be implemented as computer-readable instructions or methods, and processing nodes on the network for executing the instructions or methods. The processing node may include a processor included in the access node or a processor included in any controller node in the wireless network that is coupled to the access node.

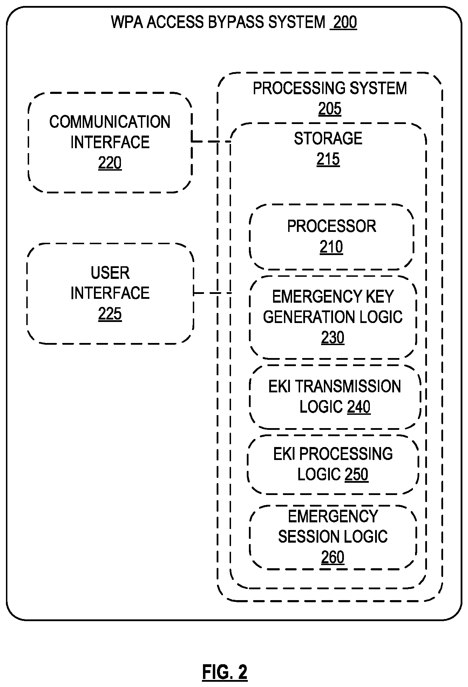

FIG. 2 depicts further details of the WPA access bypass system 200, which may be configured to perform the methods and operations disclosed herein to bypass security for accessing the apparatus 130a, 130b. In the disclosed embodiments, the WPA access bypass system 200 may be integrated with the both the wireless devices 120a and 120b and the apparatus 130a and 130b. The WPA access bypass system 200 may further be an entirely separate component, such as a processing node, capable of communicating with the wireless devices 120a and 120b via the apparatus 130a and 130b. In some instances, the wireless devices 120a and 120b and the apparatus 130a and 130b may download components from the WPA access bypass system 200. At a minimum, the WPA access bypass system 200 may be utilized to provide firmware updates to the wireless devices 120a, 120b and the apparatus 130a, 130b that support EKI and emergency session establishment.

The WPA access bypass system 200 may be configured to supply functionality to both the wireless devices 120a and 120b and the apparatus 130a and 130b to allow them to communicate with one another during emergency events. The WPA access bypass system 200 includes a processing system 205. Processing system 205 may include a processor 210 and a storage device or memory 215. Storage device 215 may include a disk drive, a flash drive, a memory, or other storage device configured to store data and/or computer readable instructions or codes (e.g., software). The computer executable instructions or codes may be accessed and executed by processor 210 to perform various methods disclosed herein. Processor 210 may be a microprocessor and may include hardware circuitry and/or embedded codes configured to retrieve and execute software stored in storage device 215.

Software stored in storage device 215 may include computer programs, firmware, or other form of machine-readable instructions, including an operating system, utilities, drivers, network interfaces, applications, or other type of software. For example, software stored in storage device 215 may include one or more modules for performing various operations described herein. For example, emergency key generation logic 230 may be utilized to cause generation of the EKI. EKI transmission logic 240 may cause the EKI to be transmitted from the wireless device 120b to the apparatus 130b as an information element (IE) in a WiFi frame. EKI processing logic 250 may cause the apparatus 130b to recognize that the wireless device 120b has detected an emergency. Further, emergency session logic 260 may allow the apparatus 130b to establish, conduct, and terminate the emergency session for the wireless device 120b as appropriate.

Communication interface 220 may include hardware components, such as network communication ports, circuitry, devices, routers, wires, antenna, transceivers, etc. These components may, for example, receive requests from the wireless device 120b User interface 225 may be configured to allow a user to provide input to the WPA access bypass system 200 and receive data or information from the WPA access bypass system 200. User interface 225 may include hardware components, such as touch screens, buttons, displays, speakers, etc. The WPA access bypass system 200 may further include other components such as a power management unit, a control interface unit, etc.

The WPA access bypass system 200 thus may utilize the memory 215 and the processor 210 to perform multiple operations. For example, the processor 210 may access stored instructions in the memory 215 to determine whether an emergency event is occurring, generate an EKI, transmit the EKI, and establish, conduct, and terminate an emergency session. The WPA access bypass system 200 may be utilized to download components to the wireless devices 120a, 120b and the apparatus 130a, 130b.

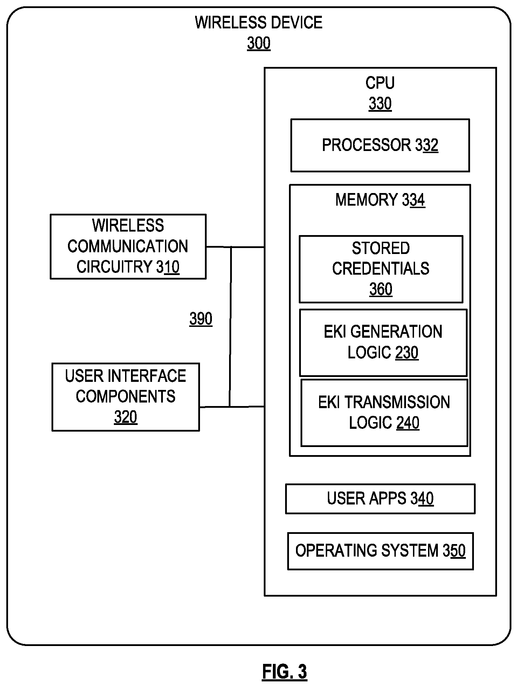

FIG. 3 depicts a wireless device 300 in accordance with disclosed embodiments. It should be noted that the wireless device 300 may correspond to, or be a representation of the wireless devices 120a and 120b as shown in FIG. 1. As illustrated, the wireless device 300 includes wireless communication circuitry 310, user interface components 320, a central processing unit (CPU) 330, processor 332, memory 334, user apps 340, and operating system 350. Components may be connected, for example, by a bus 390. These components are merely exemplary and the wireless device 300 may include a larger or smaller number of components capable of performing the functions described herein. Wireless devices such as smartphones may have multiple microprocessors and microcontrollers. A microprocessor may have a bus to communicate with memory on separate chips and buses to communicate with the rest of the equipment. Alternatively or additionally, the mobile phone may include a System On a Chip (SoC).

The memory 334 may store, for example, credentials for accessing WiFi networks such as those provided by apparatus 130a and 130b. The memory 334 may further store EKI generation logic 230 and EKI transmission logic 240. When executed by the processor 332, the EKI generation logic 230 may generate an EKI upon recognition of an emergency event when the cellular network is not available (e.g., out of range) and the stored credentials 360 do not include credentials to access an available WiFi network that is provided by apparatus 130a or 130b. The recognition may be triggered, for example, by an attempt by the wireless device 300 to make an emergency call. Currently existing logic is able to identify an emergency call based on the entered number, e.g., 911, or 1911. It is within scope of this disclosure to enhance this logic in order to recognize additional numbers that may be deemed emergency numbers. The particulars of the generated EKI are further described below. However, it should be noted that the EKI includes a digital signature created using a wireless device identifier and timestamp. This information may be hashed using a secure algorithm to ensure the integrity and uniqueness of the digital signature. The secure algorithm may be or include, for example, secure hash algorithm (SHA)-256. However other algorithms may alternatively be utilized.

Further, the processor 332 executes the EKI transmission logic 240 to transmit the generated EKI from the wireless device 300 to the apparatus 130a or 130b, for example as an IE in a WiFi frame. Thus, in embodiments provided herein, the EKI generation logic 230 and the EKI transmission logic 240 operate in conjunction with the processor 332 to perform a method for ensuring that the wireless device 300 is able to notify the apparatus 130a and 130b that an emergency event has occurred.

The wireless communication circuitry 310 may include circuit elements configured to generate wireless signals (e.g., one or more antennas) as well as interface elements configured, for example, to translate control signals from the CPU 330 into data signals for wireless output. Further, the wireless communication circuitry 310 may include multiple elements, for example to communicate in different modes with different RATs. The CPU 330 may be configured to receive, interpret, and/or respond to signals received via the wireless communication circuitry 310. The CPU 330 may be configured to receive a network command (e.g., from an access node 110) to perform other specified functions. The user interface components 320 may be or include any components enabling a user to interact with the wireless device 300, including tools for managing the EKI generation logic 230 and the EKI transmission logic 240.

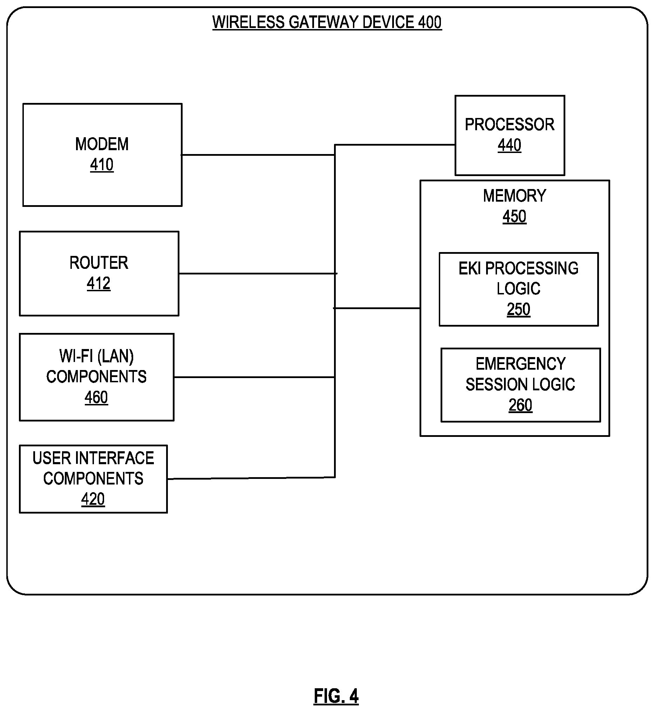

FIG. 4 illustrates a wireless gateway device 400 in accordance with embodiments described herein. The wireless gateway device 400 may correspond to the apparatus 130a and 130b as illustrated in FIG. 1 The wireless gateway device 400 may be a device that combines the purposes of both a modem and a router. The components described herein are merely exemplary as many different configurations for the wireless gateway device 400 may be implemented.

The wireless gateway device 400 may include, for example, a modem 410, which includes functionality for connecting devices to the internet including a modulator-demodulator that converts signals from connected devices to be transmitted using telephone lines, cable lines or wireless technology. The signal may then be sent to the internet service provider (ISP) 136, which provides the internet connection. The modem 410 may further include multiple antennas for communicating with a cellular network using different radio access technologies (RATs), such as, for example, a 5G RAT.

The wireless gateway device 400 may further include a router 412. The router 412 may include functionality for connecting with the modem 410. Further, the router 412 may include wireless capabilities for providing a WiFi network to wireless devices such as wireless devices 120a and 120b. The router 412 takes a signal received at the modem 410 and distributes it to the wireless devices, such as 120a, 120b, and 300 associated with the WiFi network. The router 412 is capable of creating a local area network (LAN), distributing the single internet connection provided by the modem 410 to multiple wireless devices. The router 412 further receives communications from the wireless devices 120a, 120b, and 300 and forwards them to the modem 410. The wireless gateway device 400 may further include additional WiFi or LAN components 460 depending on the features of the router 412.

The router 412 also includes security features such as built-in firewalls and security protocols. For example, the router 412 may generally require a WPA key from wireless devices 120a and 120b in order to allow connection to the WiFi network. While the WPA key is generally available to authorized devices, in some instances, the wireless devices 120a, 120b, and/or 300 may not be authorized. Accordingly, embodiments provided herein allow wireless devices outside of RAN coverage, such as wireless device 120b to bypass entry of a wireless key during an emergency event. While embodiments provided herein refer to WPA, it should be understood that other security protocols, such as wired equivalent privacy (WEP), WPA2, and WPA3 may alternatively be utilized.

User interface components 420 may operate to allow set-up of the wireless gateway device 400 directly from the wireless gateway device 400. Alternatively, wireless gateway device 400 may be configured to interact with a wireless device 300, for example using a mobile app, for setup purposes.

The wireless gateway device 400 may additionally include a processor 440 for retrieving and executing instructions stored in a memory 450. The structure of the processor 440 and the memory 450 may be substantially similar to that described above with respect to processors 210 and 332 and memories 215 and 334 described above with respect to FIGs. 2 and 3. Instructions including EKI processing logic 250 and emergency session logic 260 may be stored in the memory 450 and executed by the processor 440. The EKI processing logic 250 may be utilized to recognize an EKI transmitted to the wireless gateway device 400 from the wireless device 120a, 120b, and/or 300.

The emergency session logic 260 is triggered by recognition of a valid EKI by the EKI processing logic 250. For example, the EKI processing logic 250 may utilize the same algorithm used by the wireless device in order to decode and process the digital signature of the EKI. The EKI processing logic 250 may generate a second hash based on the wireless device identifier and timestamp and compare the second hash with the received hash to complete validation. If an initial attempt is unsuccessful, the wireless gateway device 400 may request and a retry and continue until success is achieved to ensure a secure connection. The emergency session logic 260 establishes an emergency session for a wireless device 120a, 120b, and/or 300 detecting an emergency event. Further, the emergency session logic 260 may be operable to terminate the established emergency session upon termination of an emergency call by the wireless device 120a, 120b, and/or 300.

The wireless gateway device 400 may further include additional features not shown such as antennas, transceivers, further signal processing components, a system on chip (SoC), microcontrollers, or microprocessors. The wireless gateway device 400 may additionally include peripherals not shown.

Further, while the wireless gateway device 400 combines the functionality of the modem 410 and the router 412, separate modems, routers, and wireless access points (WAPs) may alternatively be utilized. When the components are separated, the EKI processing logic 250 and the emergency session logic 260 may be incorporated in the router to bypass WPA.

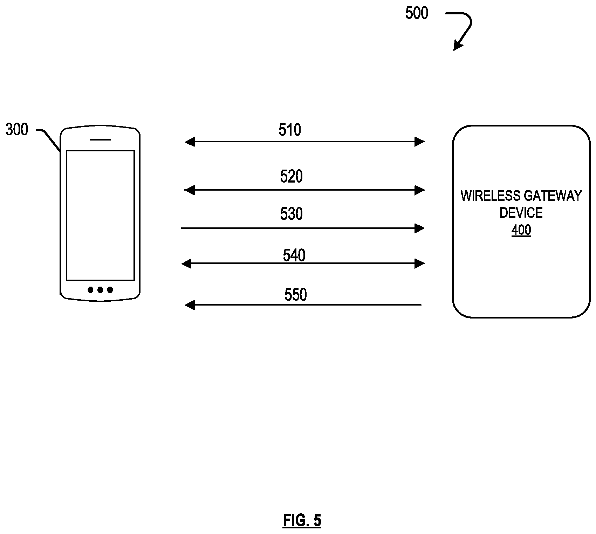

FIG. 5 illustrates an exemplary operation scenario 500 between a wireless device 300 and a wireless gateway device 400 used in a WPA bypass system 200 when the wireless device user detects an emergency scenario in accordance with disclosed embodiments. For example, the emergency scenario may be detected when an emergency call is initiated at the wireless device 300 by the wireless device user. As shown in FIG. 5, an exchange 510 initially occurs between the wireless device 300 and the wireless gateway device 400. In the exchange 510, the wireless device 300, upon finding itself unable to connect with the RAN 170, begins active scanning for nearby WiFi networks. Further, the wireless gateway device 400 broadcasts beacons advertising the available WiFi network.

In exchange 520, the wireless gateway device 400 sends its service set identifier (SSID), or the name assigned to the WiFi network. In the illustrated scenario, based on the SSID, wireless device 300 determines that it does not have saved credentials required by the wireless gateway device 400 to access the WiFi network. Thus, in step 530, in order to bypass WPA, the wireless device 300 generates an EKI and transmits the EKI in a WiFi frame of an association request to the wireless gateway device 400.

In step 540, the wireless gateway device 400 responds by establishing an emergency session for the wireless device 300. The emergency session may, for example, allow a VoWiFi emergency call, such as an E911 call, by the wireless device 300. The process for registering for and conducting a VoWiFi emergency call proceeds as usual. Further, in step 550, the wireless gateway device 400 detects termination of the emergency VoWiFi call and thus, terminates the established emergency session.

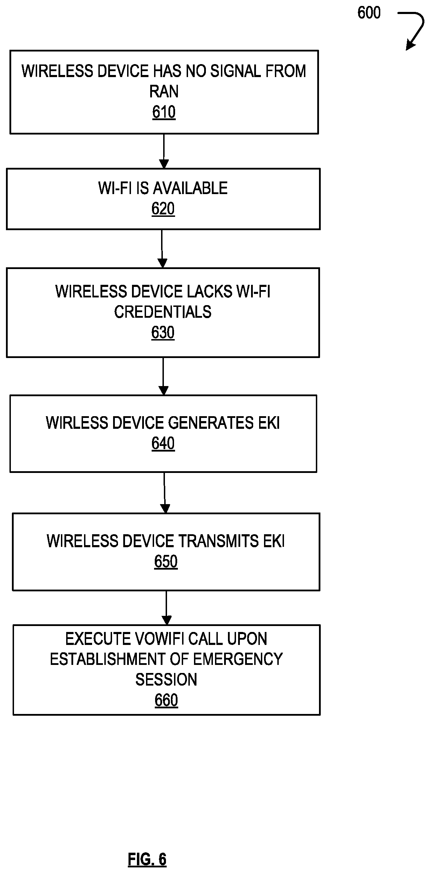

The disclosed methods for bypassing WPA in emergency situations are discussed further below. FIG. 6 illustrates an exemplary method 600 for bypassing WPA from a wireless device perspective. Method 600 may be performed by any suitable processor discussed herein. For discussion purposes, as an example, method 600 is described as being performed by the processor 332 of the wireless device 300.

Method 600 begins in step 610, when the wireless device 300 determines it has no RAN signal. That is, the wireless device 300 is out of range of cellular coverage of a base station. Accordingly, in step 620, the processor 332 of wireless device 300 scans for a wireless network and determines that a WiFi network is available. The scan for the WiFi network may be triggered by the lack of cellular coverage.

In step 630, the processor 332 of the wireless device 300 determines that it lacks credentials, e.g., WPA credentials for the WiFi network. The processor 332 may make this determination based on its lack of stored SSID for the WiFi network. Further, the processor 332 may detect an emergency call, such as an E911 call, attempted by the wireless device user in order to trigger generation of the EKI. Thus, in step 640, the processor 332 implements stored logic 230 to generate an EKI. In step 650, the processor 332 implements stored logic 250 to trigger transmission of the EKI. The EKI may be transmitted as an IE in a WiFi frame during an association request. The EKI is included as an information element (IE) embedded in a WiFi frame transmitted from a wireless device 300 to a wireless access point or gateway 400 to request establishment of an emergency voice over WiFi (VoWiFi) session. In embodiments provided herein, the EKI may be a maximum of sixty-four bytes. Finally, in step 660, the wireless device makes a VoWiFi emergency call in response to establishment of an emergency session by a router or a wireless gateway device 400.

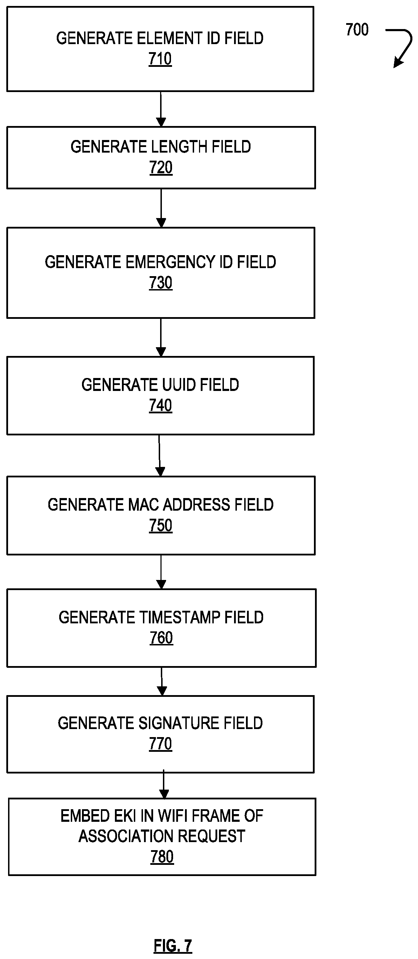

FIG. 7 depicts a further exemplary method 700 performed by a wireless device to generate an EKI and bypass WPA in accordance with disclosed embodiments. Method 700 may be performed by any suitable processor discussed herein. For discussion purposes, as an example, method 700 is described as being performed by the processor 332 of the wireless device 300.

In step 710, the processor 332 generates an element identifier (ID) field of the EKI. The element ID is a unique identifier for the EKI IE. In step 720, the processor 332 generates a length field of the EKI. The length field may be representative of the length of EKI data. In step 730, the processor 332 generates an emergency ID field of the EKI. The emergency ID may be used to identify the particular emergency event experienced by the wireless device user.

In step 740, the processor 332 generates a universally unique identifier (UUID) field of the EKI. The UUID is a 128-bit (16 byte) label for the EKI. The UUID is generated according to standard methods that guarantee its uniqueness. In step 750, the processor 332 generates a media access control (MAC) address field of the EKI. The MAC address is a unique identifier for use as a network address in communications within a network segment that allows devices on a network to identify each other and communicate.

In step 760, the processor generates a timestamp field of the EKI and in step 770 the processor 332 generates a signature field of the EKI. The signature field includes a digital signature that may be created using a wireless device identifier and timestamp. This information may be hashed using a secure algorithm to ensure the integrity and uniqueness of the digital signature. The secure algorithm may be or include, for example, secure hash algorithm (SHA)-256. However other algorithms may alternatively be utilized.

Finally, in step 780, the processor 332 embeds the EKI in a WiFi frame of an association request for transmission to the apparatus 400 providing the WiFi network.

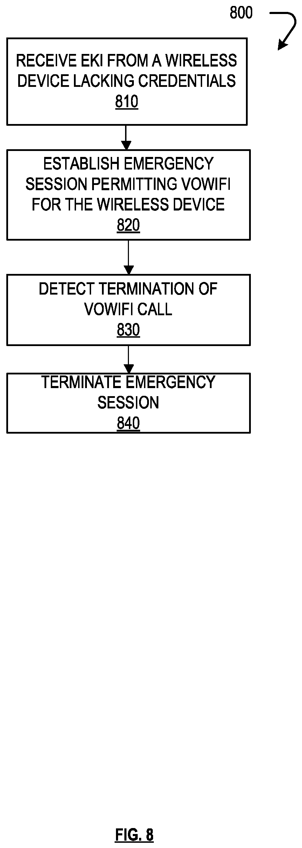

FIG. 8 depicts a further exemplary method 800 performed by a wireless gateway device 400 or a router of the wireless gateway device 400 for bypassing WPA in accordance with disclosed embodiments. Method 800 may be performed by any suitable processor discussed herein. For discussion purposes, as an example, method 800 is described as being performed by the processor 440 of the wireless gateway device 400.

Method 800 begins in step 810, when the processor 440 receives an EKI from a wireless device lacking WPA credentials. The EKI provides the processor 440 with an indication that the wireless device detects an emergency, does not have cellular coverage, and does not have the proper credentials for accessing the wireless network deployed by the wireless gateway device 400.

The receipt of the EKI at the processor 440 triggers a validation process and establishment of an emergency session permitting VoWiFi for the wireless device in step 820. As further explained herein, the processor 440 utilizes stored logic and may implement the same algorithm used by the wireless device in order to decode and process the digital signature of the EKI. The EKI processing logic 250 may generate a second hash based on the wireless device identifier and timestamp and compare the second hash with the received hash for validation. If an initial attempt at validation is unsuccessful, the wireless gateway device 400 may request and a retry and continue until success is achieved to ensure a secure connection. Through the emergency session, the wireless device is able to make an E911 call using VoWiFi to report the emergency event. In step 830, the processor 440 detects termination of the Vo WiFi call. Finally, in step 840, the processor 440 terminates the emergency session.

In some embodiments, methods 600, 700, and 800 may include additional steps or operations. Furthermore, the methods may include steps shown in each of the other methods. As one of ordinary skill in the art would understand, the methods 600, 700, 800 may be integrated in any useful manner and the steps may be performed in any useful sequence.

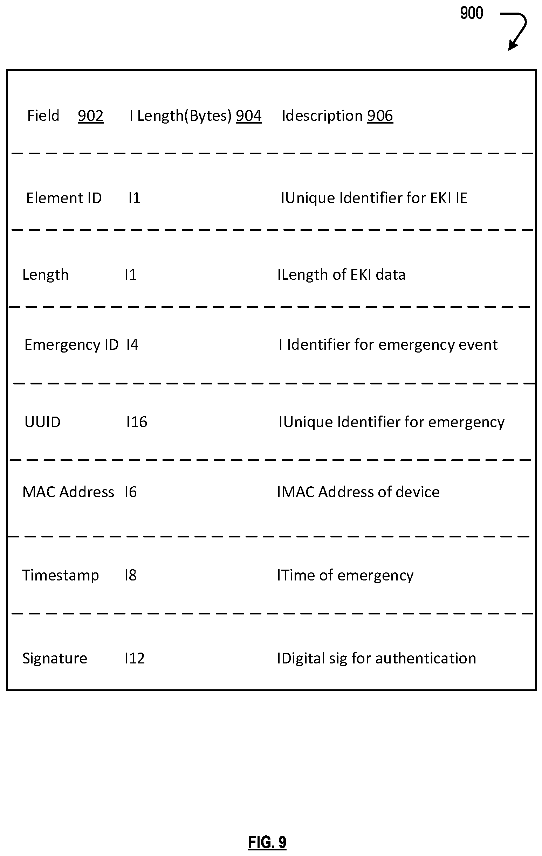

FIG. 9 depicts an emergency key identifier (EKI) 900 for use in bypassing WPA in accordance with disclosed embodiments. The EKI 900 is structured as an IE having multiple fields 902 including a length 904 and a description 906. As set forth above, the element ID is a unique identifier for the EKI IE and has a length of one byte in the illustrated embodiment. The length field represents the length of EKI data and has a length of one byte. The emergency ID field is an identifier for the emergency event and has a length of four bytes. The UUID is a unique identifier for the emergency and has a length of sixteen bytes. The MAC address provides an address for the wireless device and has a length of six bytes. The timestamp field provides a time of the emergency and has a length of eight bytes. Finally, the signature field provides a digital signature for authentication and has a length of twelve bytes. The digital signature may be created using a wireless device identifier and timestamp. This information may be hashed using a secure algorithm to ensure the integrity and uniqueness of the digital signature. The secure algorithm may be or include, for example, secure hash algorithm (SHA)-256. However other algorithms may alternatively be utilized.

Accordingly, the displayed EKI 900 has a total length of forty-eight bytes. The maximum length of the EKI 900 in currently available implementation is sixty-four bytes as the EKI 900 will be included in WiFi association request frames. The wireless device 300 activates the logic to create the EKI when an emergency call is detected, there is no cellular signal, and the available WiFi network is not saved in memory.

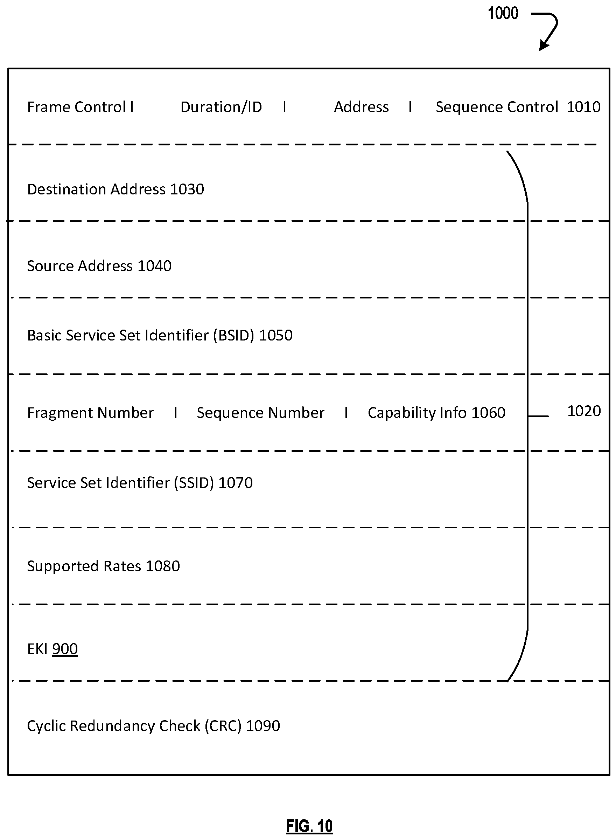

FIG. 10 depicts a WiFi frame 1000 for transmission of an EKI 900 for use in bypassing WPA in accordance with disclosed embodiments. More specifically, the wireless device 300 detecting an emergency with no cellular coverage and lacking credentials to access the available WiFi network sends the WiFi frame 1000 to the wireless gateway device 400. In current implementations, the maximum size of a WiFi frame is two thousand three hundred forty-six bytes, as defined by the 802.11 standard. However, a common size for the WiFi frame is fifteen hundred bytes. WiFi headers typically take up to forty-six bytes, thus leaving approximately one thousand four hundred fifty-four bytes in a WiFi frame for operations such as probe scans or associate requests during WiFi scans. It is feasible to define the Emergency Key Identifier (EKI) 900 within the IE because the IE is designed for advanced features. Furthermore, the size of the EKI 900 does not exceed sixty-four bytes.

The WiFi frame 1000 includes a header 1010, which may include, for example, thirty bytes and carries frame control, duration, address, and sequence control information. The frame control information determines interpretation of remaining fields in the WiFi frame. The duration provides the expected duration of the current transmission. The address may include destination, source, and to and from addresses. The sequence control includes a sequence number of frame fragments. The WiFi frame further includes a body 1020, which may include data such as destination 2030, source address 1040, basic service set identifier (BSID) 1050, fragment number, sequence number, and capability info 1060, service set identifier (SSID) 1070, supported rates 1080, and the EKI 900. Further the WiFi frame 1000 may include a frame check sequence such as cyclic redundancy check (CRC) 1090 to detect transmission errors. As illustrated, the EKI 900 is included in the WiFi frame 1000 transmitted from the wireless device 300 to the wireless gateway device 400 or other apparatus providing a WiFi network. The EKI 900 is included after standard fields in the WiFi frame. The wireless device 300 triggers this logic to create the EKI and include it as an IE in the WiFi frame during the association request phase, based on the lack of a saved SSID at the wireless device 300.

The exemplary systems, devices, apparatus, and methods described herein may be performed under the control of a processing system executing computer-readable codes embodied on a computer-readable recording medium or communication signals transmitted through a transitory medium. The computer-readable recording medium may be any data storage device that can store data readable by a processing system, and may include both volatile and nonvolatile media, removable and non-removable media, and media readable by a database, a computer, and various other network devices. Examples of the computer-readable recording medium include, but are not limited to, read-only memory (ROM), random-access memory (RAM), erasable electrically programmable ROM (EEPROM), flash memory or other memory technology, holographic media or other optical disc storage, magnetic storage including magnetic tape and magnetic disk, and solid state storage devices. The computer-readable recording medium may also be distributed over network-coupled computer systems so that the computer-readable code is stored and executed in a distributed fashion. The communication signals transmitted through a transitory medium may include, for example, modulated signals transmitted through wired or wireless transmission paths.

The above description and associated figures teach the best mode of the invention. The following claims specify the scope of the invention. Note that some aspects of the best mode may not all be within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

## Claims

1. A wireless device comprising:
a memory storing data and instructions; and
a processor accessing the data and instructions and executing the instructions to perform multiple operations including;
scanning for available WiFi networks;
transmitting an emergency key identifier (EKI) to an apparatus providing the available WiFi network upon finding a lack of credentials stored in the memory for utilizing the available WiFi network; and
joining an emergency session established by apparatus providing the available WiFi network.

2. The wireless device of claim 1, wherein the operations further comprise generating the EKI at the wireless device.

3. The wireless device of claim 2, wherein the stored instructions include EKI logic for generation and transmission of the EKI.

4. The wireless device of claim 3, wherein transmitting the EKI includes transmitting the EKI in an association request.

5. The wireless device of claim 3, wherein transmitting the EKI includes transmitting the EKI in a WiFi frame.

6. The wireless device of claim 5, wherein transmitting the EKI in the WiFi frame includes transmitting the EKI as an information element (IE) in the WiFi frame.

7. The wireless device of claim 5, wherein the EKI is a maximum of sixty-four bytes.

8. The wireless device of claim 1, wherein the scanning for the available WiFi is triggered by lack of cellular coverage.

9. The wireless device of claim 1, wherein joining the emergency session includes executing a voice over WiFi (VoWiFi) call.

10. An emergency key identifier (EKI) comprising:
an information element (IE) embedded in a WiFi frame transmitted from a wireless device to an apparatus providing a WiFi network to request establishment of an emergency voice over WiFi (VoWiFi) session.

11. The EKI of claim 10, wherein the EKI includes at least one of:
a unique element identifier identifying the EKI;
an emergency identifier field including an identifier for an emergency event;
a unique identifier for an emergency; and
a media access control (MAC) address of the wireless device.

12. An apparatus comprising:
a memory storing data and instructions;
a wireless communication interface; and
a processor accessing the data and instructions and executing the instructions to perform multiple operations including;
receiving an emergency key identifier (EKI) from a wireless device lacking credentials to access a wireless network; and
establishing an emergency session permitting the wireless device to access the wireless network and utilize voice over WiFi (VoWiFi) .

13. The apparatus of claim 12, wherein the EKI is received in an association request.

14. The apparatus of claim 12, wherein the EKI is received as an information element (IE) in a WiFi frame.

15. The apparatus of claim 12, wherein the emergency session is a VoWiFi call associated with an emergency event;
and optionally wherein the operations further comprise terminating the emergency session upon termination of the VoWiFi call.
